# EUROPÄISCHE PATENTANMELDUNG

(11) **EP 2 502 942 A1**
(43) Veröffentlichungstag der Anmeldung: **26.09.2012**
(21) Anmeldenummer: 12001848.6
(22) Anmeldetag: 19.03.2012
(51) Int. Cl.: C08F 20/10, H01B 3/44

(54) **Verwendung dualhärtbarer Zusammensetzungen in der Metallographie**

(30) Priorität: 25.03.2011 DE 102011015224
(71) Anmelder: Heraeus Kulzer GmbH & Co. KG, 63450 Hanau (DE)
(72) Erfinder: Eppinger, Bernhard, 35781 Weilburg (DE); Neugebauer, Marc, 61231 Nauheim (DE)
(74) Vertreter: Kühn, Hans-Christian

(57) **Zusammenfassung**

Die Erfindung betrifft die Verwendung einer dualhärtenden polymerisierbare Zusammensetzung umfassend mindestens ein Monomer eines (Meth-)acrylats und eine Kombination umfassend mindestens einen Photoinitiator und heißhärtenden Initiator sowie gegebenenfalls einen Aktivator, als Einbettmasse bei der Materialprüfung eines Substrates oder in der Metallographie, insbesondere von porösen Substraten.

## Beschreibung

Die Erfindung betrifft die Verwendung einer dualhärtenden polymerisierbaren Zusammensetzung umfassend mindestens ein Monomer eines (Meth-)acrylats und eine Kombination umfassend mindestens einen Photoinitiator und heißhärtenden Initiator sowie gegebenenfalls einen Aktivator als Einbettmasse bei der Materialprüfung eines Substrates oder in der Metallographie.

Die DE-C-44 12 715 beschreibt die Verwendung von zwei Komponenten Mischungen (2K-Mischungen) mit Edelmetallpulver und Methylmethacrylat-Styrol-Harz mit einem Benzoylperoxid und einer Härterkomponente. Nach dem Mischen der beiden Komponenten härtet die Zusammensetzung über einen längeren Zeitraum aus. Nachteilig an diesen Zusammensetzungen ist die kurze Zeit in der sie korrekt verarbeitet werden können.

Weiter sind sogenannte selbsthärtende Systeme oder kalthärtende Systeme bekannt, die nur über einen begrenzten Zeitraum verarbeitet werden können. Diese Systeme sind ausschließlich 2K-Systeme, bei denen nach Zugabe des Härters das System innerhalb einer relativ kurzen Verarbeitungszeit verbraucht werden muss. Zudem ist an diesen Systemen nachteilig, dass, um transparente Proben zu erhalten, unter erhöhtem Druck polymerisiert werden muss.

Bei bekannten, rein Licht härtenden Systemen können keine porösen oder Hohlräume enthaltende Substrate eingegossen werden, da an Stellen ohne Lichteinfall keine Polymerisation stattfindet.

Es gibt auch heißhärtende Systeme, also Systeme, die unter Erwärmung polymerisieren. Diese Systeme weisen den Nachteil auf, dass die Aushärtung unter Druck und hoher Temperatur. Bei diesen heißhärtenden Einbettmaterialien werden granulatförmige Produkte mittels einer Heißpresse unter hohem Druck und bei hoher Temperatur gehärtet. Nachteilig ist auch hier, dass keine transparenten Proben hergestellt werden können, auch eine Einbettung temperatur- und/oder druckempfindlicher Proben ist auf diese Weise nicht möglich, beispielsweise bei Elektronikbauteilen in der Elektronikindustrie. Um diese einzubetten werden bislang teure Einbettpressen mit Kühlung, insbesondere Wasserkühlung, benötigt.

Dualhärtende Zusammensetzungen sind ebenfalls an sich bekannt: So stellt sich WO 2008122504 A1 zunächst die Aufgabe, Alternativen zu den mit Bisacylphosphin Photinitiatoren verwendeten BAPO Co-Initiatoren zu finden. Gefunden wurden die alpha Hydroxyketone der Formel I. Dann wird beschrieben, dass zusammen mit beispielsweise AIBN dual (simultan) oder doppelt (nacheinander) härtende Zusammensetzungen - u. a. methacrylathaltige - entstehen. Die mangelnde Durchhärtungstiefe vor allem bei pigmentierten Zusammensetzungen kann dadurch verbessert werden. In WO 2008122504 A1 wird eine breite Palette von Anwendungsmöglichkeiten angegeben, darunter decorative coatings - diese aber nur als Klarlack. Auch die Anwesenheit von Füllstoffen ist möglich. Glasfüller werden zur besseren Härtung pigmentierter Zusammensetzungen empfohlen.

Aufgabe der vorliegenden Erfindung war es, eine Zusammensetzung zu entwickeln, die keine Limitierung hinsichtlich der Dauer ihrer Verarbeitbarkeit aufweist, vorzugsweise sehr dünnflüssig ist, und somit auch in Hohlräume jeder Art, wie Poren, Bohrungen und/oder Kapillaren infiltriert werden kann und zugleich nicht die Nachteile üblicher heißhärtender Zusammensetzungen aufweist. Ferner sollte die Handhabung der Zusammensetzung wirtschaftlicher sein und eine industrielle Einbettung von Substraten, wie Elektronikbauteilen, sowie ggf. eine Fixierung und Aushärtung erlauben. Dabei sollte möglichst aus wirtschaftlichen und ökologischen Gesichts-punkten auf die Verwendung von Wärmeträgermedien oder Kühlmitteln verzichtet werden können.

Gelöst wird die Aufgabe durch die erfindungsgemäße Verwendung nach Anspruch 1. Weitere Details bevorzugter Ausführungsformen sind in den Unteransprüchen sowie in der Beschreibung detailliert erläutert.

Gegenstand der Erfindung ist die Verwendung einer dualhärtenden polymerisierbaren Zusammensetzung, die mittels einer Polymerisation mit Licht gehärtet wird und gleichzeitig durch die entstehende Polymerisationswärme in einem definierten Temperaturbereich ausgehärtet wird, als Einbettmasse in der Metallographie. Die erfindungsgemäß verwendete, dualhärtende polymerisierbare Zusammensetzung umfassend mindestens ein Monomer eines (Meth-)acrylats, insbesondere eine Mischung von Monomeren von (Meth-) acrylaten mit einer (Meth-)acrylat-Gruppe, und eine Kombination umfassend mindestens einen Photoinitiator und heißhärtenden Initiator sowie gegebenenfalls einen Aktivator. Eine erfindungsgemäß verwendete Zusammensetzung umfasst mindestens ein Monomer eines (Meth-)acrylat, insbesondere ein Monomer eines Methacrylat, bevorzugt eine Mischung von Monomeren von Methacrylaten.

Die erfindungsgemäß verwendete Zusammensetzung kann im Einzelfall gegebenenfalls zusätzlich einen Gehalt an Füllstoff enthalten. Die Schreibweise (Meth.-)acrylat bedeutet, dass die Zusammensetzung ein Methacrylat und/oder ein Acrylat umfassen kann.

Die erfindungsgemäß verwendete Zusammensetzung erlaubt eine einfache Handhabung einer polymerisierbaren Zusammensetzung über quasi einen unbestimmten Zeitraum und liegt zugleich in einer einzigen Zusammensetzung vor. Mit der erfindungsgemäß verwendeten Zusammensetzung können Substrate mit Hohlräumen, wie Poren, Bohrungen, Kapillaren infiltriert und eingebettet werden. Die Polymerisation startet mittels Licht, die dann selbständig aufgrund der entstehenden Polymerisationswärme in der Zusammensetzung den heißhärtenden Initiator aktiviert. Auf diese Weise gelingt mit nur einer Zusammensetzung eine einfache und wirtschaftliche Einbettung von Substraten, bevorzugt von Substraten mit Hohlräumen.

Ein besonderer Vorteil der Zusammensetzung ist ihre Verwendung in industriellen, automatisierten Verfahren zur Prüfung von Elektronikbauteilen oder optischen Bauteilen. Durch die Licht induzierte Polymerisation erfolgt, durch die dabei frei werdende Polymerisationswärme, die vollständige Aushärtung durch Aktivierung des heißhärtenden Initiators.

Vorzugsweise ist der Photoinitiator eine Carbonyl-funktionalisierte Verbindung, wobei die Carbonyl-Verbindung insbesondere kein Peroxid ist. Bevorzugt ist der Photoinitiator ein Benzophenon, ein Benzophenon Derivat, Ethyl- 2,4,6-Trimethylbenzoyl-phenylphosphinate, Benzoin oder ein Benzoin-Derivat, ein alpha-Diketon, wie 9,10-Phenantrenchinon, Diacetyl, Furil, Anisil, 4,4'-Dichlorbenzil und 4,4'-Dialkoxybenzil oder ein Acylphosphinoxid und/oder Campherchinon. Ein besonders bevorzugter Photoinitiator ist Campherchinon und/oder Ethyl - 2,4,6 - Trimethylbenzoylphenylphosphinate. Um eine besonders schnell härtende Zusammensetzung zu erhalten ist es von Vorteil den Photoinitiator zusammen mit einem Aktivator einzusetzen. Bevorzugte Aktivatoren sind Reduktionsmittel und insbesondere ein Amin. Besonders bevorzugte Amine sind N,N-Dimethyl-p-toluidin, N,N-Dihydroxyethyl-p-toluidin und insbesondere N,N-Cyanoethyl-methylanilin.

Die Photoinitiatoren und Aktivatoren werden vorzugsweise in einer Gesamtmenge von 0,05 bis 2,0 Gew.-%, besonders bevorzugt 0,1 bis 0,8 Gew.-%, in Bezug auf die Gesamtzusammensetzung eingesetzt.

Als problematisch bei der Herstellung einer dualhärtenden Zusammensetzung haben sich übliche heißhärtende Peroxide erwiesen, die nicht zu stabilen, insbesondere lagerstabilen Zusammensetzungen führten. Es stellte sich heraus, dass die Peroxide mit den vorgenannten Aktivatoren reagieren können. Die Herstellung von Mischungen mit üblichen heißhärtenden Peroxiden führte teilweise bereits beim Mischvorgang zur Aushärtung der Zusammensetzung, so dass sie unbrauchbar war bzw. zu kurze Verarbeitungszeiten aufwiesen und nur als zwei-Komponentensystem lagerfähig sind.

Erst durch den Einsatz eines heißhärtenden Initiators, basierend auf einem Azo-System wie einem Azo-bis-Alkylnitril konnten stabile dualhärtbare Zusammensetzungen erhalten werden, die als eine einzige Zusammensetzung vertrieben werden kann. Als besonders bevorzugte heißhärtende Initiatoren haben sich Azo-bis-Alkylnitrile erwiesen, deren Alkylsubstituenten jeweils unabhängig 3 bis 15 C-Atome aufweisen, vorzugsweise mit verzweigten Alkylsubstituenten, besonders bevorzugt mit am C-2 verzweigten Alkylsubstituenten. Die erfindungsgemäß verwendeten Azo-bis-alkylnitrile haben eine Aktivierungstemperatur etwa ab 48 °C oder ab 55 °C oder ab 65 °C. Dem Fachmann ist klar, dass die bevorzugte Aktivierungstemperatur von der jeweiligen Anwendung und der Temperaturstabilität des Substrates abhängt, das mit der Zusammensetzung eingebettet wird. Bei sehr niedrigen Temperaturen ist die Wärme induzierte Polymerisation in der Regel langsam.

Besonders schnell erfolgt die Wärme-Polymerisation, insbesondere im Bereich von 60 °C bis 150 °C, vorzugweise zwischen 80 °C bis 140 °C. Durch die Dualhärtung während einer Einbettung von massiven Subtraten kann auf eine Kühlung der Probe in der Regel verzichtet werden, da die Polymerisationswärme zum Teil für die Aktivierung der heißhärtenden Initiatoren verbraucht wird. Erfindungsgemäß wird AIBN (Azo-bis-Isobutyronitril; 2,2'-Azobis(2-methylpro-pionitril)) und/oder AMBN (2,2'-Azo-bis(2-Methylbutyronitril) eingesetzt. Die erfindungsgemäß verwendeten Azo-bis-Alkylnitrile reagieren nicht mit den in der Zusammensetzung gegebenenfalls vorliegenden Aminen (Aktivatoren). Der heißhärtende Initiator ist erfindungsgemäß kein Peroxid.

Der erfindungsgemäße Vorteil der dualhärtenden Zusammensetzungen ist eine zuverlässige Aushärtung selbst mit stark pigmentierten, dunklen oder opaken Zusammensetzungen. Zudem können nun auch poröse Substrate, wie bei der Metallographie zuverlässig und einfach eingebettet werden. Durch die UV/Vis-Licht induzierten Polymerisation kann durch die spezielle Wahl des heißhärtenden Initiators die Heißhärtung in der Zusammensetzung durch die erzeugte Polymerisationswärme ausgelöst werden. Der heißhärtende Initiator wird vorzugsweise durch die Polymerisationswärme bei Temperaturen ab 40 °C aktiviert, insbesondere bei Temperaturen ab 50 °C.

Alternativ kann auch mit einem Temperaturprofil ausgehärtet werden. So kann zu Beginn der Heißhärtung eine Temperatur von bis zu 150 °C durch Kühlung oder Erwärmen eingestellt werden und anschließend kann die Probe über die Zeit von selbst auskühlen. Bei temperaturempfindlichen Substraten bietet es sich an, die Konzentration des heißhärtenden Initiators zu senken, so dass keine separate Kühlung notwendig ist. Denn durch eine definierte Konzentration des heißhärtenden Initiators lässt sich die Härtungstemperatur und -zeit regulieren. Eine besonders schnelle Aushärtung innerhalb von 3 bis 12 Minuten wird bei hohen Temperaturen zwischen 120 bis 140 °C erzielt. Ein weiterer Vorteil der Dualhärtung ist die stark vereinfachte Handhabung während der Polymerisationszeit.

Ein weiterer Vorteil der dualhärtenden Zusammensetzung liegt darin, dass die durch das Licht induzierte Polymerisation aufgebaute Spannung in der Zusammensetzung durch die sich anschließende Heißhärtung abgebaut wird. Durch diesen Effekt der Heißhärtung können mit der erfindungsgemäß verwendeten Zusammensetzung Bauteile, wie Elektronikbauteile, optische Bauteile, mit deutlich verbesserten mechanischen Eigenschaften eingebettet werden.

Eine erfindungsgemäß verwendete Zusammensetzung enthält mindestens ein (Meth-)acrylat Monomer mit nur einer (Meth-)acrylat-Gruppe, insbesondere eine Mischung mindestens zweier dieser (Meth-) acrylat Monomere. Bevorzugt sind diese monomeren (Meth-)acrylat mit einer (Meth-)acrylat-Gruppen ausgewählt aus Methylmethacrylat, Tetrahydrofurfuryl-Methacrylat (THF-Methacrylat), Tetrahydrofurfuryl-acrylat (THF-acrylat), Ethylenmethacrylat, Propylmethacrylat, Butylmethacrylat, n-Hexylmethacrylat, 2-Phenoxyethylacrylat, 2-Phenoxyethylmethacrylat, Isobornylmethacrylat, Isodecylmethacrylat, Polypropylen-glykol-mono-methacrylat, Tetrahydrofuryl-methacrylat, Polypropylen- glykol-mono-methacrylat, Hydroxyethylmethacrylat, Hydroxypropylmethacrylat, aus Methylacrylat, Ethylenacrylat, Propylacrylat, Butylacrylat, n-Hexylacrylat, 2-Phenoxyethyl-acrylat, Isobornylacrylat, Isodecylacrylat, Polypropylen-glykol-mono-acrylat, Tetrahydrofuryl-acrylat, Polypropylen- glykol-mono-acrylat, Hydroxyethylacrylat, Hydroxypropylacrylat, Hydroxy-ethylmethacrylat, Hydroxypropylmethacrylat und/oder einer Mischung enthaltend mindestens zwei dieser (Meth-)acrylate.

Eine erfindungsgemäß verwendete Zusammensetzung enthält mindestens ein (Meth-)acrylat Monomer mit nur einer (Meth-)acrylat-Gruppe, insbesondere eine Mischung mindestens zweier dieser (Meth-) acrylat Monomere zusammen mit einem Oligomer bzw. Polymer eines (Meth)acrylats, wie PMMA (Polymethylmethacrylat) und/oder Urethan-di-Acrylat-Oligomer. Bevorzugte Mischungen von Monomeren umfassen THF-Methacrylat, Isobornyl-Methacrylat und 2-Phenoxy-Methacrylat.

Gemäß einer Alternative kann eine Zusammensetzung auch mindestens ein Monomer eines (Meth-)acrylats, wie Methylmethacrylat, Tetrahydrofurfuryl-Methacrylat (THF-Methacrylat), Tetrahydrofurfuryl-acrylat (THF-acrylat), Isobornyl Methacrylat, Isobornyl Acrylat, 2-Phenoxyethyl-Methacrylat und/oder 2-Phenoxyethyl-Acrylat, enthalten, weiter bevorzugt sind Mischungen dieser (Meth-)acrylate. Bevorzugte Monomere weisen eine sehr geringe Viskosität auf, um ein Fließen der Zusammensetzung in Hohlräume, wie Nuten, Hinterscheidungen oder auch Poren zu erlauben. Eine Zusammensetzung kann vorzugsweise auch mindestens ein Monomer eines Methacrylats, wie Methylmethacrylat, und ein Monomer eines Acrylats, insbesondere mit mindestens zwei Acrylat-Gruppen enthalten, wie Trimethylolpropan-Triacrylat.

Eine ebenfalls bevorzugte Zusammensetzung enthält mindestens ein Monomer eines (Meth-) acrylats mit einem mit aromatischen und/oder aliphatischen Kohlenwasserstoffgrundgerüst, das vorzugsweise ein (Meth-)acrylat mit mindestens zwei (Meth-)acrylat-Endgruppen ist, wie ein Ether eines 2,2'-Bis-(phenol)propans, oder mit einem Alkylenoxy-Grundgerüst mit 2 bis 4 C-Atomen in jeder bifunktionellen Alkylen-Gruppe, wie Ethylenglykol, Triethylenglykol,Tetraethylenglykol oder ein Trimethylolpropan.

Nach einer weiteren bevorzugten Alternative enthält die Zusammensetzung mindestens ein (Meth-)acrylat Monomer mit mindestens zwei (Meth-)acrylat-Gruppen, mindestens ein (Meth-) acrylat Monomer mit drei, vier, fünf (Meth-)acrylat-Gruppen und/oder sechs (Meth-)acrylat-Gruppen oder eine Mischung mindestens zweier dieser (Meth-)acrylate. Geeignete Monomere von (Meth-)acrylaten mit zwei (Meth-)acrylat-Gruppen sind ausgewählt aus Ethandioldimethacrylat, Tetraethylenglykoldimethacrylat, Diethylenglykoldimethacrylat, Ethylenglykoldimethacrylat, Polyethylenglykoldimethacrylat (400) oder (600), Butandioldimethacrylat, Hexandioldimethacrylat, Decandioldimethacrylat, Dodecandioldimethacrylat, 1,3-Butylenglykoldimethacrylat, Dipropylglykolmethacrylat, Bisphenol-A-dimethacrylat, Bisphenol-A-dimethacrylat Derivat, wie ethoxyliertes 2-bisphenol-A-dimethacrylat, Trimethylolpropantrimethacrylat, Triethylenglykoldimethacrylat, 2,2-Bis-4-(3-methacryloxy-2-hydroxy-propoxy)-phenylpropan (Bis-GMA), Tricyclodecandimethanoldimethacrylat, Ethandioldiacrylat, Tetraethylenglykoldiacrylat, Diethylenglykoldiacrylat, Ethylenglykoldiacrylat, Polyethylenglykoldiacrylat (400) oder (600), Butandioldiacrylat, Hexandioldiacrylat, Decandioldiacrylat, Dodecandioldiacrylat, 1,3-Butylenglykoldiacrylat, Dipropylglykolacrylat, Bisphenol-A-diacrylat, Bisphenol-A-diacrylat Derivat, wie ethoxyliertes 2-bisphenol-A-diacrylat, Trimethylolpropantriacrylat, Triethylenglykoldiacrylat, 2,2-Bis-4-(3-methacryloxy-2-hydroxy-propoxy)-phenylpropan (Bis-GMA), Tricyclodecandimethanoldiacrylat, Urethanacrylat mit mindestens zwei Acrylat-Gruppen und/oder ein Urethanmethacrylat mit mindestens zwei Methacrylat-Gruppen oder einer Mischung enthaltend mindestens eins der (Meth-)acrylate.

Zusammensetzungen mit mindestens einem Methacrylat Monomer mit mindestens zwei Methacrylat-Gruppen ergeben nach einer Aushärtung Einbettungen mit besonders großer Härte und Festigkeit. Ein wesentlicher Aspekt bei der Herstellung von Zusammensetzungen zur Herstellung von Einbettungen kann je nach Anwendung ein hoher und langanhaltender Glanz der Oberfläche sein. Zudem zeigen die ausgehärteten Zusammensetzungen eine sehr geringe Schlagempfindlichkeit. Wird eine Zusammensetzung zur Metallographie eingesetzt, dann wird eine hohe Härte der Einbettung angestrebt, damit die ausgehärtete Probe leichter geschliffen und bearbeitet werden kann.

Je nach Anwendung kann eine Zusammensetzung vorzugsweise ein (Meth-)acrylat mit drei bis sechs (Meth-)acrylat-Gruppen enthalten, das ausgewählt ist aus:
(i) mit drei (Meth-)acrylat-Gruppen aus ethoxyliertem-(15)-Trimethylolpropan-Triacrylat, ethoxyliertem-5-Pentaerythritoltriacrylat, propoxyliertes-(5.5)-Glyceryltriacrylat, Trimethylolpropan trimethacrylat, Tris(2-hydroxyethyl)-isocyanurat-triacrylat, ethoxyliertem-(15)-Trimethylolpropan-Trimethacrylat, ethoxyliertem-5-Pentaerythritoltrimethacrylat, propoxyliertes-(5.5)-Glyceryltrimethacrylat, Trimethylolpropan triacrylat, Tris(2-hydroxyethyl)-isocyanurat-trimethacrylat, und/oder
(ii) mit vier (Meth-)acrylat-Gruppen ein Di-Trimethylolpropan-tetra-acrylat, ethoxyliertes-(4)-Pentaerythritol-tetra-acrylat, Pentaerythritol-tetra-acrylat, Di-Trimethylolpropan-tetra-methacrylat, ethoxyliertes-(4)-Pentaerythritol-tetra-methacrylat, Pentaerythritol-tetra-methacrylat und/oder
(iii) mit fünf (Meth-)acrylat-Gruppen ein Di-Pentaerythritol-pentaacrylat, Di-Pentaerythritolpentamethacrylat, Dipentaerythritol pentaacrylate, Di(tetramethylolmethan)pentametharcylat und/oder
(iv) mit sechs (Meth-)acrylat-Gruppen ein Dipentaerythrit-hexa(meth)acrylat oder eine Mischung enthaltend mindestens zwei der vorgenannten (Meth-)acrylate.

Bevorzugte Acrylat Monomere mit mindestens zwei Acrylat-Gruppen sind: Trimethylolpropan-triAcrylat, Pentaerythrit-tetra-Acrylat. Gemäß einer Alternative kann eine Zusammensetzung auch mindestens ein Oligomer bzw. Polymer eines (Meth-)acrylats enthalten, wie PMMA (Polymethylmethacrylat) und/oder Urethan-di-Acrylat-Oligomer enthalten.

Gemäß einer besonders bevorzugten Ausführungsform der Erfindung umfasst eine Zusammensetzung zu (a) 0,1 bis 95,0 Gew.-% (Meth-)acrylat Monomer, insbesondere mit einer, zwei, drei, vier, fünf und/oder sechs (Meth-)acrylat-Gruppen, besonders bevorzugt eine Mischung von mindestens zwei dieser (Meth-)acrylate, insbesondere zu 60 bis 80 Gew.-%, vorzugsweise zu 60 bis 75 Gew.-% und zu (b) 0,0 bis 99,7 Gew.-% mindestens ein Oligomer eines (Meth-) acrylats, vorzugsweise 5 bis 99,97 Gew.-%, weiter bevorzugt 20 bis 45 Gew.-%, wie vorzugsweise Urethan-di-Acrylat-Oligomer, und (c) 0,1 bis 5,0 Gew.-% Photoinitiator und gegebenenfalls einem Gehalt an Aktivator und (d) 0,1 bis 5,0 Gew.-% heißhärtenden Initiator, insbesondere 0,04 bis 5,5 Gew.-% heißhärtenden Initiator und (e) 0,0 bis 40,0 Gew.-% Füllstoff, insbesondere zu 0,01 bis 10 Gew.-%, insbesondere 0,01 bis 7,0 Gew.-%, besonders bevorzugt 0,01 bis 5,0 Gew.-%; und (f) 0,0 bis 30,0 Gew.-% Pigment, insbesondere 0,01 bis 8,0 Gew.-%, in der Gesamtzusammensetzung von 100 Gew.-%.

Gemäß weiteren besonders bevorzugten Ausführungsform der Erfindung umfasst eine Zusammensetzung zu (a) 0,1 bis 95,0 Gew.-% (Meth-)acrylat Monomer mit einer (Meth-)acrylat-Gruppe, vorzugsweise eine Mischung dieser Monomere, besonders bevorzugt von Methylmethacrylat, Tetrahydrofurfuryl-Methacrylat (THF-Methacrylat), Tetrahydrofurfuryl-acrylat (THF-acrylat), Isobornyl Methacrylat, Isobornyl Acrylat, 2-Phenoxyethyl-Methacrylat und/oder 2-Phenoxyethyl-Acrylat, vorzugsweise zu 60 bis 80 Gew.-%, besonders bevorzugt zu 60 bis 75 Gew.-% und zu (b) 0,0 bis 99,7

Gew.-% mindestens ein Oligomer eines (Meth-) acrylats, vorzugsweise 5 bis 99,97 Gew.-%, weiter bevorzugt 20 bis 45 Gew.-%, wie vorzugsweise Urethan-di-Acrylat-Oligomer, und (c) 0,1 bis 5,0 Gew.-% Photoinitiator und gegebenenfalls einem Gehalt an Aktivator und (d) 0,1 bis 5,0 Gew.-% heißhärtenden Initiator, insbesondere 0,04 bis 5,5 Gew.-% heißhärtenden Initiator und (e) 0,0 bis 40,0 Gew.-% Füllstoff, insbesondere zu 0,01 bis 10 Gew.-%, insbesondere 0,01 bis 7,0 Gew.-%, besonders bevorzugt 0,01 bis 5,0 Gew.-%; und (f) 0,0 bis 30,0 Gew.-% Pigment, insbesondere 0,01 bis 8,0 Gew.-%, in der Gesamtzusammensetzung von 100 Gew.-%.

Gemäß einer weiteren alternativen, besonders bevorzugten Ausführungsform der Erfindung umfasst eine Zusammensetzung zu (a) 60 bis 99,7 Gew.-% (Meth-)acrylat Monomer, insbesondere 60 bis 97 Gew.-% ausgewählt aus mindestens einem (Meth-) acrylat Monomer mit einer oder zwei (Meth-)acrylat-gruppen oder eine Mischung umfassend diese, und (b) 5 bis 99,97 Gew.-% ein (Meth-)acrylat Oligomer (synonym auch Polymer), insbesondere weist das Oligomer mehr als drei polymerisierte (Meth-) acrylate auf, vorzugsweise umfasst das Oligomer kein aromatisches und/oder aliphatisches Kohlenwasserstoffgrundgerüst oder es enthält kein Alkylenoxy-Grundgerüst mit 2 bis 4 C-Atomen in jeder Alkylen-Gruppe. Als Monomer kommen insbesondere Methylmethacrylat, Trimethylolpropan-triacrylat, Trimethylolpropan-trimethacrylat, 2-Phenoxyethyl-methylacrylat und/oder 2-Phenoxyethyl-acrylat, Tetrahydrofuryl-methacrylat, Isobornyl Methacrylat und/oder Isobornyl Acrylat in Betracht. Als Oligomer kann bevorzugt ein Polymethacrylat und/oder Urethan-di-Acrylat-Oligomer verwendet werden, wobei weiter bevorzugt als Komponente a) das (Meth-)acrylat Monomer oder eine Mischung von Monomeren zu 50 bis 69,7 Gew.-% und das (Meth-)acrylat Oligomer zu 30 bis 49,7 Gew.-% vorliegen, und zu (c) 0,05 bis 2,0 Gew.-% mindestens ein Photoinitiator und gegebenenfalls ein Aktivator und zu (c) 0,02 bis 7,0 Gew.-% mindestens ein heißhärtender Initiator, insbesondere zu 0,04 bis 5,5 Gew.-%, weiter bevorzugt zu 0,05 bis 5,00 Gew.-% in Bezug auf die Gesamtzusammensetzung von 100 Gew.-%.

Zusammensetzungen mit einem Gehalt an AIBN und/oder AMBN von 0,05 bis 5,00 Gew.-% in der Gesamtzusammensetzung können beispielsweise bei der Heißhärtung bei 130 °C innerhalb von 1 bis 15 Minuten aushärten in Abhängigkeit von dem zu polymerisierenden Volumen der Zusammensetzung. Ein weiterer Vorteil der dualhärtenden Zusammensetzung ist, dass sie auch im Bereich von Hinterschneidungen bei Einbettungen aufgrund der Heißhärtung aushärten. Dadurch wird erstmals die Herstellung formschlüssig befestigter Einbettungen möglich, ohne die Probleme einer üblichen Heißhärtung in Gegenwart von flüssigen Wärmeträgermedien.

Zur Einstellung des Fließverhaltens der Zusammensetzung werden vorzugsweise monofunktionelle Monomere mit niedriger Viskosität in der Zusammensetzung eingesetzt. Ein Füllstoff wird vorzugsweise aufgrund des Anwendungszwecks nicht oder nur in sehr geringen Mengen zugegeben.

Durch die Wahl und den Gehalt der (Meth-)acrylate in der Zusammensetzung kann die Viskosität und das Verhalten der Zusammensetzung für ein leichtes Aufbringen und Verteilen auf einem Substrat zur Einbettung des Substrates gewählt werden. Zusammensetzungen mit besonders niedriger Viskosität können vorteilhaft für die Metallographie oder zur Infiltrierung von Poren, Hohlräumen allgemein oder Kapillaren verwendet werden. Auch angestrebte mechanische Eigenschaften der ausgehärteten Zusammensetzungen, wie eine nicht zu hohe Härte und Festigkeit, lassen sich über die Wahl und den Gehalt des (Meth-)acrylats einstellen. Bei der Metallographie ist man bestrebt keine zu harten ausgehärteten Zusammensetzungen zu erhalten, da diese sich nur schwer schleifen oder schneiden lassen würden.

Als Füllstoffe eignen sich generell partikuläre organische temperaturstabile Füllstoffe oder auch partikuläre anorganische Füllstoffe. Besonders bevorzugte Füllstoffe sind Quarz-Pulver, GlasPulver, Glasmehl, Quarzmehl, Glaskeramik-Pulver, Aluminiumoxid, Siliciumoxid, insbesondere pyrogene und/oder gefällte Kieselsäure. Besonders bevorzugte Füllstoffe sind Glaspulver, z.B. Bariumglas-, Bariumsilikatglas-, Lithium- oder Aluminium-Silikatglas-Pulver und feinstteilige Kieselsäuren, wie pyrogene oder gefällte Kieselsäuren. Der Füllstoff kann vorzugsweise silanisiert sein, um eine bessere Dispergierung in den (Meth-)acrylaten zu ermöglichen.

Um die gewünschten optischen Eigenschaften der ausgehärteten Zusammensetzung hinsichtlich Farbe und Erscheinungsbild variieren zu können, kann eine erfindungs-gemäße Zusammensetzung vorzugsweise einen Farbstoff und/oder ein Pigment enthalten. Der Farbstoff oder das Pigment kann ausgewählt sein aus organischen und/oder anorganischen Farbstoffen und Pigmenten, insbesondere Calciumcarbonat; wie Marmor, Kreide; Titandioxid, Berlinerblau, vorzugsweise Pigmentblau 27 C.I. 77510; Brillantgelb, insbesondere organisch; vorzugsweise Pigmentgelb 74 C.I. 11741; Chromoxidgrün; vorzugsweise Pigmentgrün 17 C.I. 77288; Eisenoxidschwarz; Pigmentschwarz 11 C.I. 77499; Manganviolett; Pigmentviolett 16 C.I. 77742; Phthalocyaninblau, insbesondere organisch; Pigmentblau 15 C.I. 74160; Titanweiß; Pigmentweiß C.I. 77891; Ultramarinblau dunkel, vorzugsweise Pigmentblau 29 C.I. 77007; Ultramarinrot A, vorzugsweise Pigmentrot 259 C.I. 77007. Ebenfalls bevorzugte Farbstoffe und/oder Pigmente sind beispielsweise: schwarz: Microlith schwarz C-T, carbon black pigment (preparation) C.I.

Pigment black 7 No. 77266; weiss: Titandioxid; rot: Microlith rot BR-T, C.I. Pigment red 144 Azo condensation pigment (preparation), Eisenoxid Pigment, BASF; grün: Cosmenyl Grün GG, Pigment green 7, C.I.No. 74260, perlweiss: Iriodin 120 Glanzsatin, Merck; blau: Ultramarin Blau L 6498, BASF.

Dem Fachmann ist klar, dass auch Glimmer oder andere, dem Fachmann hinlänglich bekannte Pigmente oder Farbstoffe der Zusammensetzung zugesetzt werden können, um die optischen Effekte der ausgehärteten Zusammensetzung hinsichtlich Farbe, Leuchtkraft, Reflexionsvermögen, oder auch Fluoreszenz einzustellen.

Dabei weisen die Farbstoffe und Pigmente vorzugsweise eine Partikelgröße im Bereich von 0,1 µm bis 8 µm auf oder liegen molekulardispers verteilt in der Zusammensetzung vor.

Der Gehalt der Farbstoffe und/oder Pigmente in der Zusammensetzung liegt vorzugsweise zwischen 0,03 bis 5,0 Gew.-%, insbesondere zwischen 0,03 bis 2,5 Gew.-% bezogen auf die Gesamtzusammensetzung.

Zusätzlich können der Zusammensetzung weitere Zusätze, wie Polymerisationsinhibitoren, z.B. Hydrochinonmonomethylether (MEHQ), und Lichtstabilisatoren zugesetzt werden.

Gegenstand der Erfindung ist die Verwendung einer dualhärtbaren Zusammensetzung als Einbettmasse bzw. Einbettmaterial, bei der Materialprüfung eines Substrates oder bei der Metallographie, insbesondere bei der Metallographie zur Präparation des Gefüges eines Substrates, für transparente Schliffeinbettung, indem die Zusammensetzung auf das Substrat aufgebracht oder das Substrat mit der Zusammensetzung umhüllt wird,
- mit Licht polymerisiert wird, insbesondere zur Polymerisierung und/oder Fixierung der Zusammensetzung auf dem Untergrund oder dem Substrat,
- durch Wärme heißgehärtet wird, insbesondere durch die bei der Polymerisation entstehende Polymerisationswärme.

Bevorzugt wird die Zusammensetzung verwendet als Einbettmasse für ein poröses Substrat, bei der Metallographie zur Präparation des Gefüges eines Substrates, bei einer Materialprüfung eines Substrates, bspw. zur Darstellung von Rissen; insbesondere zur Darstellung eines Gefüges, für transparente Schliffeinbettung in der Materialprüfung und/oder als Einbettmasse für die Prüfung bei medizinischen Instrumenten und/oder Prothesen.

Die Polymerisation der Zusammensetzung wird vorzugsweise mit Licht im UV/Vis-Bereich induziert, insbesondere im Wellenlängenbereich von 350 bis 600 nm, wobei die Photoinitiatoren vorzugsweise wellenlängenselektiv sind, wie bspw. gemäß einer Alternative zwischen 400 bis 500 nm eine Polymerisation bewirken.

Ein besonderer Vorteil der Dualhärtung ist die Licht induzierte Polymerisationswärme, die aufgrund der besonderen Wahl des heißhärtenden Initiators für die anschließende Aushärtung genutzt werden kann. Auf diese Weise ist eine separate Erwärmung der polymerisierten Zusammensetzung nicht notwendig, sie härtet quasi von selbst vollständig aus. Zur Beschleunigung der Heißhärtung kann die Zusammensetzung zusätzlich bei höheren Temperaturen behandelt werden. Dies bietet sich bei der Herstellung von Beschichtungen auf Substraten an, da die Polymerisationswärme in dünnen Schichten zu gering sein kann, um den heißhärtenden Initiator zu aktivieren. Erfindungsgemäß kann bei der anschließenden Erwärmung auf Wärmeträgermedien und/oder Druck zur Wärmeübertragung verzichtet werden.

Bei der erfindungsgemäßen Verwendung kann die Zusammensetzung auf ein Substrat, ein Material aufgebracht werden. Alternativ kann der Bereich des Substrates zuvor mit einem Haftvermittler, wie bspw. einem Haftvermittler für Metall und/oder Kunststoff versehen werden, vorzugsweise auf Basis eines Methacryloyloxydecyl-dihydrogenphosphats oder hydrophoben Dimethacrylats mit Benzoylperoxid. Im nächsten Schritt kann die Zusammensetzung darauf angebracht werden. Zweck des Haftvermittlers ist die Ausbildung eines festen Verbundes zwischen Metalloberfläche und Einbettmaterial.

Gestartet wird die Polymerisation mit Licht der oben angegebenen Wellenlänge. Anschließend wird die polymerisierte Zusammensetzung mit dem fixierten Bauteil durch die Polymerisationswärme ab 60 °C selbständig ausgehärtet. Als Lichthandgerät und Lichtpolymerisationsgerät können im dentalen Bereich eingesetzte Geräte verwendet werden. Bevorzugt wird die Licht induzierte Polymerisation mittels Blaulicht durchgeführt.

Nachfolgend wird die Erfindung anhand von Beispielen näher erläutert, ohne sie auf die Beispiele zu beschränken:

### Beispiele

Zunächst wurden die nachstehend angegebenen ungefärbten Zusammensetzungen durch inniges Vermengen der einzelnen angegebenen Komponenten hergestellt:
Nach dem Eingießen der Zusammensetzung wird diese mit UV/Vis-Licht polymerisiert und anschließend aufgrund der, bei der Polymerisation freiwerdenden Wärme ausgehärtet. Die Probe erhitzt sich in der Regel selbständig auf über 60 °C. Die Härtungszeit hängt u.a. von der Konzentration des heißhärtenden Initiators ab.

**Tabelle 1: Grundrezeptur Zusammensetzung:**

| **Komponente** | **Gew.-%** |
|---|---|
| THF-Methacrylat | 20 |
| Isobornyl-Methacrylat | 10 |
| 2-Phenoxyethyl-Methacrylat | 38 |
| Urethan-di-Acrylat-Oligomer (Craynor CN 9200) | 31 |
| **Lucirin** TPO (Diphenyl(2,4,6,-trimethylbenzoyl)phosphinoxid) | 0,5 |
| DL-Campherchinon, | |
| N,N, Dihydroxyethyl-p-toluidin | |
| AIBN | 0,5 |

**Tabelle 2: Grundrezeptur Zusammensetzung:**

| **Komponente** | **Gew.-%** |
|---|---|
| THF-Methacrylat | 20 |
| Isobornyl-Methacrylat | 10 |
| 2-Phenoxyethyl-Methacrylat | 38 |
| Urethan-di-Acrylat-Oligomer (Craynor CN 9200) | 31 |
| DL-Campherchinon, | 0,2 |
| N,N,Dihydroxyethyl-p-toluidin | 0,1 |
| **Lucirin** TPO (Diphenyl(2,4,6,-trimethylbenzoyl)phosphinoxid) | 0,2 |
| AIBN | 0,5 |

**Tabelle 3: Grundrezeptur Zusammensetzung:**

| **Komponente** | **Gew.-%** |
|---|---|
| THF-Methacyylat | 20 |
| Isobornyl-Methacrylat | 10 |
| 2-Phenoxyethyl-Methacrylat | 38 |
| Urethan-di-Acrylat-Oligomer (Craynor CN 9200) | 31 |
| DL-Campherchinon, | 0,2 |
| N, N, Dihydroxyethyl-p-toluidin | 0,1 |
| **Lucirin** (Diphenyl(2,4,6,-trimethylbenzoyl)phosphinoxid) | 0,2 |
| AMBN | 0,5 |

**Tabelle 4: Grundrezeptur Zusammensetzung:**

| **Komponente** | **Gew.-%** |
|---|---|
| THF-Methacyylat | 18,5 |
| Isobornyl-Methacrylat | 10 |
| 2-Phenoxyethyl-Methacrylat | 36 |
| Urethan-di-Acrylat-Oligomer (Craynor CN 9200) | 30 |
| DL-Campherchinon, | 0,2 |
| N, N, Dihydroxyethyl-p-toluidin | 0,1 |
| **Lucirin** (Diphenyl(2,4,6,-trimethylbenzoyl)phosphinoxid) | 0,2 |
| AMBN | 5,0 |

**Tabelle 5: Zusammensetzungen entsprechend den Tabellen 1 bis 4 mit quantitativ angepassten Gehalten der Komponenten unter Berücksichtigung der AIBN und/oder AMBN Gehalte mit Angabe der Zeiten für die Aushärtung**

| **Gehalt AIBN und/oder ABMN (Gew.-%)** |
|---|
| 0,10 |
| 0,20 |
| 0,40 |
| 0,50 |
| 0,80 |
| 1,00 |
| 2,00 |
| 3,00 |

## Patentansprüche

1. Verwendung einer dualhärtenden polymerisierbaren Zusammensetzung umfassend mindestens ein Monomer eines (Meth-)acrylats und eine Kombination umfassend mindestens einen Photoinitiator und heißhärtenden Initiator als Einbettmasse bei der Materialprüfung eines Substrates oder in der Metallographie.

2. Verwendung nach Anspruch 1, **dadurch gekennzeichnet, dass** der Photoinitiator eine Carbonyl-funktionalisierte Verbindung umfasst.

3. Verwendung nach Anspruch 1, **dadurch gekennzeichnet, dass** der heißhärtende Initiator ein Azo-bis-Alkylnitril ist, und die beiden Alkylsubstituenten jeweils unabhängig 3 bis 15 C-Atome aufweisen, insbesondere AIBN (Azo-bis-isobutyronitril, 2,2'-Azobis(2-methylpropionitril)) und/oder AMBN (2,2'-Azo-bis(2-Methylbutyronitril).

4. Verwendung nach einem der Ansprüche 1 bis 3, **dadurch gekennzeichnet,**
**dass** die Zusammensetzung mindestens ein (Meth-)acrylat Monomer mit nur einer (Meth-)acrylat-Gruppe enthält, insbesondere enthält die Zusammensetzung eine Mischung mit mindestens zweier dieser (Meth-)acrylat Monomere.

5. Verwendung nach Anspruch 4, **dadurch gekennzeichnet, dass** das (Meth-) acrylat mit einer (Meth-)acrylat-Gruppe ausgewählt ist aus
Methylmethacrylat, Ethylenmethacrylat, Propylmethacrylat, Butylmethacrylat, n-Hexylmethacrylat, 2-Phenoxyethylmethacrylat, Isobornylmethacrylat, Isodecylmethacrylat, Polypropylen-glykol-mono-methacrylat, Tetrahydrofuryl-methacrylat, Polypropylen-glykol-mono-methacrylat, Methylacrylat, Ethylenacrylat, Propylacrylat, Butylacrylat, n-Hexylacrylat, 2-Phenoxyethylacrylat, Isobornylacrylat, Isodecylacrylat, Polypropylen-glykol-mono-acrylat, Tetrahydrofuryl-acrylat, Polypropylen-glykol-mono-acrylat, Hydroxyethylacrylat, Hydroxypropylacrylat, Hydroxyethylmethacrylat, Hydroxypropylmethacrylat und/oder eine Mischung enthaltend mindestens eines dieser (Meth-)acrylate.

6. Verwendung nach einem der Ansprüche 1 bis 3, **dadurch gekennzeichnet, dass** die Zusammensetzung mindestens ein (Meth-)acrylat Monomer mit mindestens zwei (Meth-)acrylat-Gruppen, mindestens ein (Meth-)acrylat Monomer mit drei, vier, fünf (Meth-)acrylat-Gruppen und/oder sechs (Meth-)acrylat-Gruppen oder eine Mischung mindestens zweier dieser (Meth-)acrylate enthält.

7. Verwendung nach Anspruch 6, **dadurch gekennzeichnet, dass** das (Meth-)acrylat mit mindestens zwei (Meth-)acrylat-Gruppen ausgewählt ist aus Ethandioldimethacrylat, Tetraethylenglykoldimethacrylat, Diethylenglykoldimethacrylat, Ethylenglykoldimethacrylat, Polyethylenglykoldimethacrylat (400) oder (600), Butandioldimethacrylat, Hexandioldimethacrylat, Decandioldimethacrylat, Dodecandioldimethacrylat, 1,3-Butylenglykoldimethacrylat, Dipropylglykolmethacrylat, Bisphenol-A-dimethacrylat, Bisphenol-A-dimethacrylat Derivat, wie ethoxyliertes 2-Bisphenol-A-dimethacrylat, Tri-methylolpropantrimethacrylat, Triethylenglykoldimethacrylat, 2,2-Bis-4-(3-methacryloxy-2-hydroxy-propoxy)-phenylpropan (Bis-GMA), Tricyclodecandimethanoldimethacrylat, ein Urethanmethacrylat mit mindestens zwei Methacrylat-Gruppen, Ethandioldiacrylat,
Tetraethylenglykoldiacrylat, Diethylenglykoldiacrylat, Ethylenglykoldiacrylat, Polyethylenglykoldiacrylat (400) oder (600), Butandioldiacrylat, Hexandioldiacrylat, Decandioldiacrylat, Dodecandioldiacrylat, 1,3-Butylenglykoldiacrylat, Dipropylglykolacrylat, Bisphenol-A-diacrylat, Bisphenol-A-diacrylat Derivat, wie ethoxyliertes 2-Bisphenol-A-diacrylat, Trimethylolpropantriacrylat, Triethylenglykoldiacrylat, 2,2-Bis-4-(3-methacryloxy-2-hydroxy-propoxy)-phenylpropan (Bis-GMA), Tricyclodecandimethanoldiacrylat und/oder ein Urethanacrylat mit mindestens zwei Acrylat-Gruppen oder einer Mischung enthaltend mindestens eines der
(Meth-)acrylate.

8. Verwendung nach Anspruch 6 oder 7, **dadurch gekennzeichnet, dass** das (Meth-)acrylat mit drei bis sechs (Meth-)acrylat-Gruppen ausgewählt ist
(i) mit drei (Meth-)acrylat-Gruppen aus ethoxyliertem-(15)-Trimethylolpropan-Triacrylat, ethoxyliertem-5-Pentaerythritoltriacrylat, propoxyliertes-(5.5)-Glyceryltriacrylat, Trimethylolpropantrimethacrylat, Tris(2-hydroxyethyl)-isocyanurat-triacrylat, und/oder
(ii) mit vier (Meth-)acrylat-Gruppen aus Di-Trimethylolpropan-tetra-acrylat, ethoxyliertes-(4)-Pentaerythritol-tetra-acrylat, Pentaerythritol-tetra-acrylat, Di-Trimethylolpropan-tetra-methacrylat, ethoxyliertes-(4)-Pentaerythritol-tetra-methacrylat, Pentaerythritol-tetra-methacrylat und/oder
(iii) mit fünf (Meth-)acrylat-Gruppen aus Di-Pentaerythritol-pentaacrylat, i-Pentaerythritolpentamethacrylat, Dipentaerythritol pentaacrylate, Di(tetramethylolmethan)pentamethacrylat und/oder
(iv) mit sechs (Meth-)acrylat-Gruppen ein Dipentaerythrit-hexa(meth)acrylat

9. Verwendung nach einem der Ansprüche 1 bis 8, **dadurch gekennzeichnet,**
**dass** die Zusammensetzung mindestens ein Oligomer eines (Meth-)acrylats enthält, insbesondere Urethan-di-Acrylat-Oligomer.

10. Verwendung nach einem der Ansprüche 1 bis 9, **dadurch gekennzeichnet, dass** der Photoinitiator ein Benzophenon oder ein Benzophenon-Derivat, Benzoin oder ein Benzoin-Derivat, ein alpha-Diketon, ein Acylphosphinoxid, Diphenyl(2,4,6,-trimethylbenzoyl)phosphinoxid, Diacetyl, Furil, Anisil, 4,4'-Dichlorbenzil, 4,4'-Dialkoxybenzil und/oder Campherchinon umfasst.

11. Verwendung nach einem der Ansprüche 1 bis 10, **dadurch gekennzeichnet, dass** die Zusammensetzung zu
(a) 0,1 bis 95,0 Gew.-% ein (Meth-)acrylat Monomer mit einer (Meth-)acrylat-Gruppe,
(b) 0,0 bis 99,7 Gew.-% mindestens ein Oligomer eines (Meth-)acrylats,
(c) 0,1 bis 5,0 Gew.-% Photoinitiator und gegebenenfalls einem Gehalt an Aktivator und
(d) 0,1 bis 5,0 Gew.-% heißhärtenden Initiator, insbesondere 0,04 bis 5,5 Gew.-% heißhärtenden Initiator und
(e) 0,0 bis 40,0 Gew.-% Füllstoff und
(f) 0,0 bis 30,0 Gew.-% Pigment, in der Gesamtzusammensetzung von 100 Gew.-% enthält.
